# EUROPEAN PATENT APPLICATION

(11) **EP 2 292 505 A2**
(43) Date of publication of application: **09.03.2011**
(21) Application number: 10174205.4
(22) Date of filing: 26.08.2010
(51) Int. Cl.: B62M 3/08

(54) **Shoe positioning device of a bicycle**

(30) Priority: 02.09.2009 TW 098216179
(71) Applicant: Hope Industrial Corporation, Taipei Hsien (TW)
(72) Inventor: Chen, Chun-Feng, Shulin city, Taipei Hsien (TW)
(74) Representative: Lindgren, Anders

(57) **Abstract**

A shoe positioning device of a bicycle that has a pedal (10), a sole (30) and multiple positioning elements (20). The pedal (10) has multiple locating recesses (31) formed therein. The sole (30) is made of a resilient material. Each positioning element (20) has a top end selectively engaging one of the locating recesses (31), thereby positioning a shoe (70) and the pedal (10) to increase cycling speed. Besides, easy disengagement of the shoe (70) from the pedal (10) reduces chances of accident in cycling.

## Description

### 1. Field of the Invention

The present invention relates to a positioning device, and more particularly to a shoe positioning device of a bicycle for conveniently snapping in and pulling out from a cyclist's sole.

### 2. Description of the Related Art

Aside from being a means for transportation and recreation, bicycles are also used for regular exercise, professional racing, and climbing. To win a bicycle racing or climbing game/tournament, increasing riding speed and efficiency of cyclists is the name of the game.

With reference to Fig. 10, a shoe positioning device of a bicycle disclosed in Taiwanese utility model patent publication no. M317392 "Shoe Positioning Device of a Bicycle", has a pedal 80 and a shoe locator 90. The pedal 80 has a recess 81, an opening 82, a shaft 83, a first engagement element 84 and a second engagement element 85. The recess 81 is recessed from one end of the pedal 80. The opening 82 is formed through the pedal 80. The shaft 83 is formed on the pedal 80 and between the recess 81 and the opening 82 to be assembled with a frame of the bicycle. The first engagement element 84 is pivotally mounted on two sidewalls of the recess 81 and has a torsion spring 86 mounted around a pivot axis of the first engagement part 84 so that the first engagement part 84 can be pivoted in one direction and return back to the original position. The second engagement 85 is a flange formed on and protruding inwardly from one inner wall of the opening 82 facing the recess 81. The shoe locator 90 has a rib 91, two wings 92 and a tab 93. The rib 91 is formed on a recessed end of the shoe locator 90. The two wings 92 are obliquely formed on the recessed end of the shoe locator 90 and beside the rib 91. The tab 93 is formed on and extends outwardly from a protruding end of the shoe locator 90. When the rib 91 is inserted in the first engagement element 84, the two wings 92 hold and abut against a periphery of the first engagement element 84 so that the shoe locator 90 can firmly engage the pedal 80 without being easily detachable from the pedal 80.

Nevertheless, the foregoing shoe-positioning device has the following drawbacks:
1. Although the rib 91 and the wings 92 secure the engagement of the pedal 80 and the shoe locator 90, the shoe locator 90 is difficult to detach from the pedal 80. This issue could cause injuries or life-threatening accidents to cyclists if they encounter a dangerous situation and not being able to jump off the bicycle.
2. Because the shoe locator 90 is mounted on and protrudes from a bottom of a shoe, the shoe having the shoe locator 90 is dedicated to cycling instead of regular walking. Consequently, cyclists need to change shoes when they want to take a walk, which is inconvenient.
3. The conventional shoe positioning device comprises many parts.
Therefore, production costs are relatively high as more labor hours and materials are needed to produce the conventional shoe positioning device.

The objective of the present invention is to provide a shoe positioning device of a bicycle that can be quickly engaged and disengaged from a cyclist's sole.

To achieve the foregoing objective, the shoe positioning device of a bicycle has a pedal, multiple positioning elements and a sole.

The pedal has a body, a shaft tube and multiple tabs. The shaft tube is longitudinally and centrally formed through the body along the Y-axis direction and has a periphery. The tabs are formed on the periphery of the shaft tube and respectively protrude forwards and backwards along the X-axis direction. Each tab has a through hole and a top. The through hole is formed through the tab.

Each positioning element has a rod and a locating block. The rod is inserted in the through hole of a corresponding tab and has a top and a cylindrical periphery. A locating block is connected with the top of the rod and has a maximal width.

The sole is made of a resilient material and has a bottom and multiple locating recesses. The locating recesses are formed in the bottom of the sole to selectively hold the locating blocks inside. Each locating recess has a bottom opening and a top chamber. The bottom opening has a first width of the bottom opening along the X-axis direction and a second width along the Y-axis direction. The top chamber is defined above and communicates with the bottom opening and has a minimal width along the X-axis direction, a minimal width along the Y-axis direction and a maximal width along the X-axis selected from all sections of the top chamber parallel with a plane constituted by the X-axis direction and the Y-axis direction and defined as a third width, a fourth width and a fifth width respectively.

The first width and the second width of the bottom opening are smaller than the third width and the fourth width of the top chamber. The first width of the bottom opening is smaller than the second width of the bottom opening. The first width of the bottom opening is smaller than the maximal width of the locating block. The second width of the bottom opening and the third and fourth widths are greater than the maximal width of the locating block. The fifth width is smaller than the fourth width. The X-axis direction is a direction extending from a center of a front wheel axle of the bicycle to a center of a rear wheel axle. The Y-axis direction extends to transversely and perpendicularly intersect with the X-axis direction.

The shoe positioning device of a bicycle of the present invention at least has the following advantages and benefits:
1. In view of the first and second widths being smaller than the third and fourth widths, the locating block of one of the positioning elements can be received and positioned in a corresponding locating recess. Hence, the shoes of a cyclist can be positioned on the pedals. Since the first width is smaller than the second width of the bottom opening of each locating recess, the positioning element received in the locating recess can only be moved forwards and backwards upon cycling and is firmly positioned in the locating recess. When the sole of a shoe is required to pull out from the positioning element, cyclist just needs to move the shoe to the left or to the right and tilt the sole with respect to a horizontal plane to promptly pull out from the locating recess, thereby reducing chances of injury and life-threatening risks in an accident.
2. The shoe positioning device of the present invention has multiple locating recesses formed in the soles of a pair of shoes. Such shoes can be used for normal walking. Cyclists do not need to prepare an additional pair of shoes for walking after cycling, thereby providing bicycle outfits with more practical value.
3. The shoe positioning device of the present invention has a simple structure and composition of parts in favor of production, assembly and cost so as to further increase competitive edge of products of the present invention in the market.

Other objectives, advantages and novel features of the invention will become more apparent from the following detailed description when taken in conjunction with the accompanying drawings.

### IN THE DRAWINGS

Fig. 1 is bottom perspective view of a shoe positioning device of a bicycle in accordance with the present invention;
Fig. 2 is an exploded bottom prospective view of the shoe positioning device in Fig. 1;
Fig. 3 is a cross sectional bottom view of a positioning recess and a positioning block of the shoe positioning device in Fig. 1;
Fig. 4 is another cross sectional bottom view of the positioning recess and the positioning block of the shoe positioning device in Fig. 1;
Fig. 5 is a side view in partial section of the shoe positioning device in Fig, 1 along a direction of line A-A in Fig. 3;
Fig. 6 is a side view in partial section of the shoe positioning device along line B-B in Fig. 3;
Fig. 7 is an operational side view in partial section of the shoe positioning device in Fig. 6 when the positioning recess is in operation;
Fig. 8 is another operational side view in partial section of the shoe positioning device in Fig. 6 when the positioning recess is in operation;
Fig. 9 is a side view of the shoe positioning device in Fig. 1; and

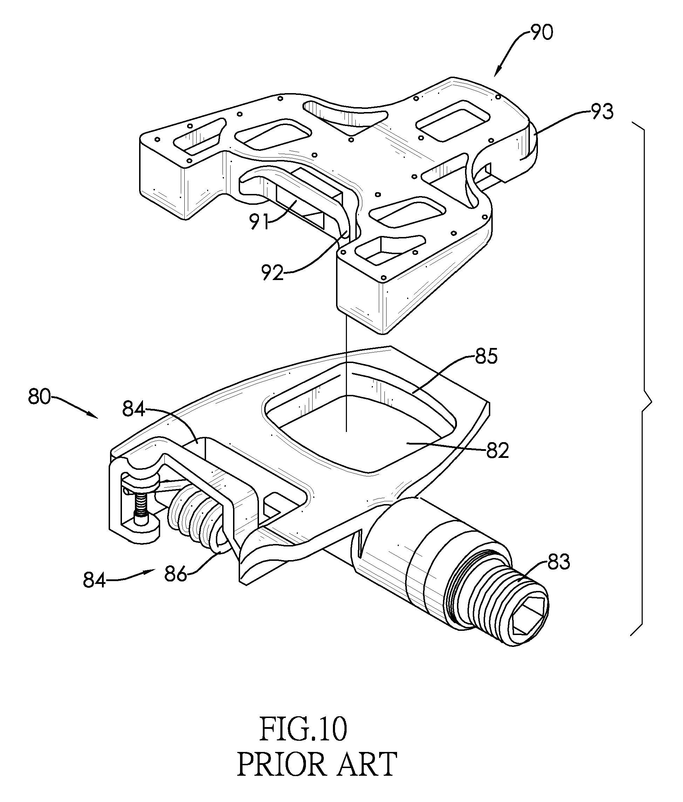

Fig. 10 is an exploded prospective view of a conventional shoe positioning device.

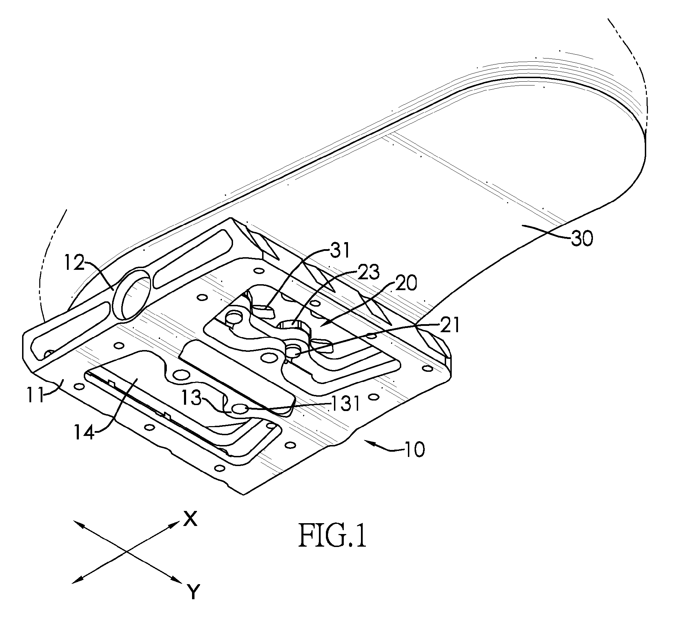

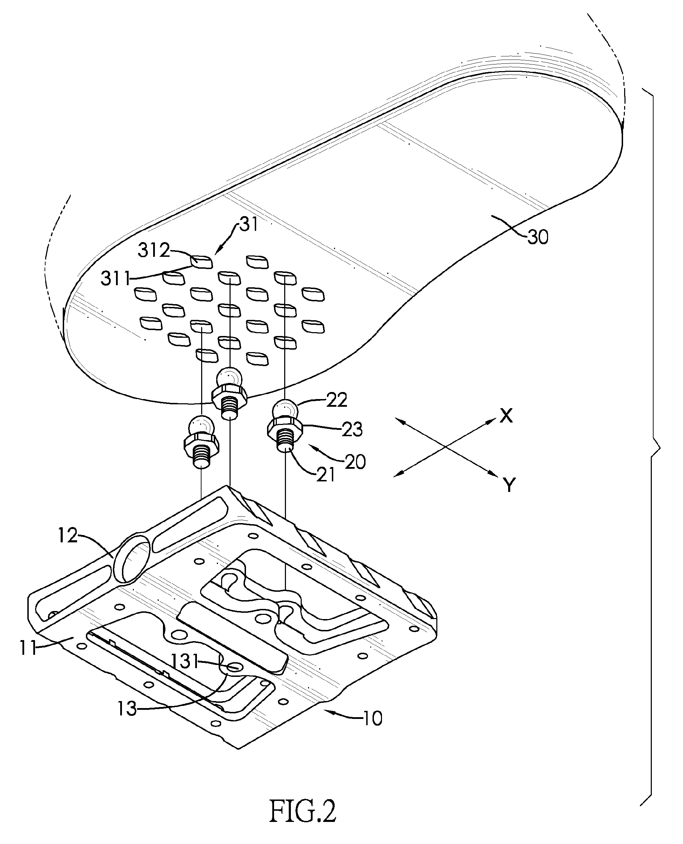

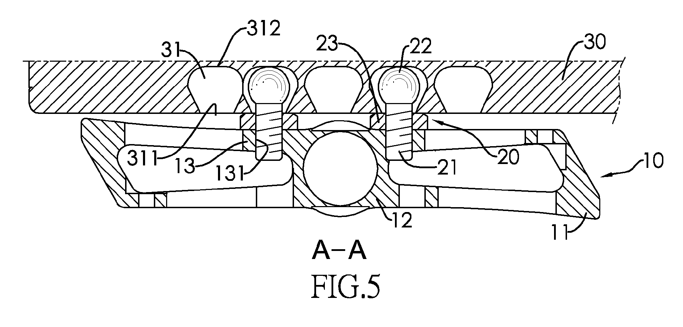

An X-axis direction is defined to extend from a center of a front wheel axle to a center of a rear wheel axle of a bicycle, and a Y-axis direction is defined to transversely and perpendicularly intersect with the X-axis direction. With reference to Figs. 1, 2 and 5, a positioning device of a bicycle in accordance with the present invention has a pedal 10, multiple positioning elements 20 and a sole 30.

The pedal 10 has a body 11, a shaft tube 12 and multiple tabs 13. The body 11 has two openings 14 formed through the body 11. The shaft tube 12 is longitudinally and centrally formed through the body 11 along the Y-axis direction and is formed between the two openings 14. When the body 11 of the pedal 10 is positioned horizontally, the tabs 13 are formed on a periphery of the shaft tube 12 and respectively protrude forwards and backwards along the X-axis direction. Each tab 13 has a through hole 131 formed through the tab 13. The tabs 13 may be formed on a top and a bottom of the pedal 10. In the present embodiment, the through hole 131 is a threaded hole.

Each positioning element 20 has a rod 21, an urging disk 23 and a locating block 22. The rod 21 has a cylindrical periphery. The urging disk 23 is formed around a top portion of the cylindrical periphery of the rod 21. The locating block 22 is formed on a top of the urging disk 23. The locating block 22 is dome-shaped and has a maximal width smaller than that of the urging disk 23. The rod 21 of the positioning element 20 is inserted in the through hole 131 of a corresponding tab 13 of the pedal 10 and is fixed with the tab 13 by a fixing means, such as welding or riveting. In the present embodiment, the rod 21 of the positioning element 20 has threads formed around the cylindrical periphery of the rod 21. Hence, the rod 21 of the positioning element 20 is screwed into the threaded hole 131 of a corresponding tab 13 of the pedal 10.

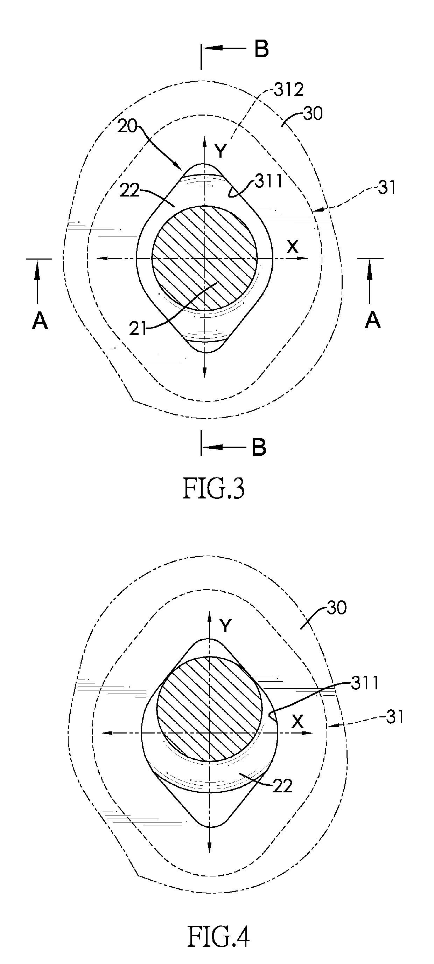

With reference to Fig. 3, the sole 30 is made of a resilient material and has multiple locating recesses 31 formed in a bottom of the sole 30, mutually spaced and arranged in multiple rows and columns aligning with the X-axis direction or the Y-axis direction. Each locating recess 31 has a bottom opening 311 and a top chamber 312. The bottom opening 311 has a first width along the X-axis direction and a second width along the Y-axis direction. The top chamber 312 is defined above and communicates with the bottom opening 311 and has a minimal width along the X-axis direction, a minimal width along the Y-axis direction and a maximal width along the X-axis direction, which are selected from all sections of the top chamber 312 being parallel with a plane constituted by the X-axis direction and the Y-axis direction and are respectively defined as a third width, a fourth width and a fifth width. The first width is smaller than the second width. The first width is smaller than a maximal width of the locating block 22. The second width, the third width and the fourth width are larger than the maximal width of the locating block 22. The fifth width is smaller than the fourth width. The sole 30 is resilient, so the bottom opening 311 can be expanded to allow the locating block 22 to pass through the bottom opening 311 and pushed into and received in the locating recess 31. Additionally, a maximal width of the urging block 23 is larger than the first width and the second width. Hence, the urging disk 23 can be positioned between the pedal 10 and the sole 30, a bottom of the urging disk 23 abuts against a top of a corresponding tab 13, and a top of the urging disk 23 abuts against the bottom of the sole 30.

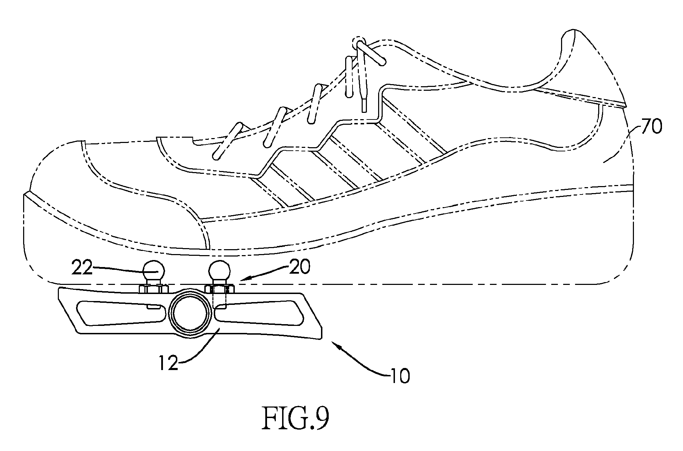

With reference to Figs. 3, 5 and 9, when the shoe positioning device is applied to a bicycle, the shaft tube 12 of the pedal 10 is rotatably mounted around a crank axle of the bicycle. The sole 30 is mounted on a bottom of a shoe 70, and the locating blocks 22 of the positioning elements 20 selectively snap in the corresponding locating recesses 31 of the resilient sole 30 so that the sole 30 can be selectively positioned on the pedal 10 to meet a cyclist's demand. When cycling, the cyclist's feet drive the soles 30 to move forwards and backwards along the X-axis direction. Since the first width of the bottom opening 311 of each locating recess 31 is smaller than the maximal width of the locating block 22 of a corresponding positioning element 20, the locating block 22 can be firmly held in the locating recess 31. Accordingly, the shoe 70 can be firmly positioned on the pedal 10, thereby increasing riding speed and efficiency.

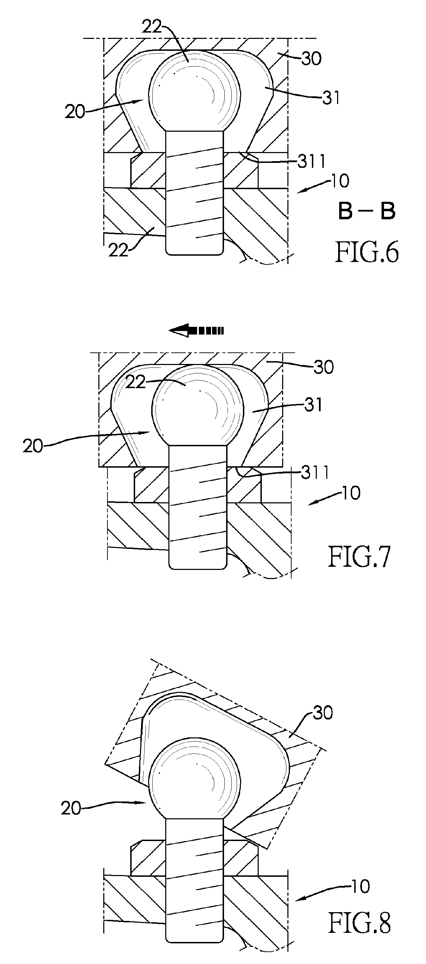

With reference to Figs. 4 and 6 to 8, in case of an emergency, the cyclist can immediately pulls out the shoes 70 from the pedals 10 so that the cyclist can jump off the bicycle. How the way of the shoe positioning device works is explained as follows. With reference to Figs. 4 and 7, as the second width of the bottom opening 311 of the locating recess 31 is larger than the maximal width of the locating block 22 and the sole 30 is resilient, the cyclist can pull out the locating block 22 from the locating recess 31 by first driving the sole 30 to move to the left or to the right along the Y-axis direction so as to position the locating block 22 adjacent to an inner wall of the locating recess 31, then tilting the sole 30 with respect to a horizontal plane and widening the second width of the bottom opening 311 to escape from the locating recess 31 for the sake of the resilient nature of the sole 30. Such an immediate and easy disengagement effectively reduces chances of injury and life-threatening risks.

Even though numerous characteristics and advantages of the present invention have been set forth in the foregoing description, together with details of the structure and function of the invention, the disclosure is illustrative only. Changes may be made in detail, especially in matters of shape, size, and arrangement of parts within the principles of the invention to the full extent indicated by the broad general meaning of the terms in which the appended claims are expressed.

## Claims

1. A shoe positioning device of a bicycle comprising:
a pedal (10) having:
a body (11); and
a shaft tube (12) longitudinally and centrally formed through the body (11) along a Y-axis direction and having a periphery;
a sole (30) having a bottom;
**characterized in that**
the penal (10) further has multiple tabs (13) formed on the periphery of the shaft tube (12) and respectively protruding forwards and backwards along an X-axis direction, each tab (13) having:
a through hole (131) formed through the tab (13); and
a top;
the shoe positioning device further comprises multiple positioning elements (20), each having:
a rod (21) inserted in the through hole (131) of a corresponding tab (13) and having a top and a cylindrical periphery; and
a locating block (22) connected with the top of the rod (21) and having a maximal width; and
the sole is made of a resilient material and further has multiple locating recesses (31) formed in the bottom of the sole (30) to selectively hold the locating blocks (22) inside, each locating recess (31) having:
a bottom opening (311) having a first width along the X-axis direction and a second width along the Y-axis direction; and
a top chamber (312) defined above and communicating with the bottom opening (311) and having a minimal width along the X-axis direction, a minimal width along the Y-axis direction and a maximal width along the X-axis selected from all sections of the top chamber (312) parallel with a plane constituted by the X-axis direction and the Y-axis direction and defined as a third width, a fourth width and a fifth width respectively;
wherein
the first width and the second width of the bottom opening (311) are smaller than the third width and the fourth width of the top chamber (312), the first width of the bottom opening (311) is smaller than the second width of the bottom opening (311), the first width of the bottom opening (311) is smaller than the maximal width of the locating block (22), the second width of the bottom opening (311) and the third and fourth widths of the top chamber (312) are greater than the maximal width of the locating block (22), and the fifth width is smaller than the fourth width,
the X-axis direction adapted to extending from a center of a front wheel axle of the bicycle to a center of a rear wheel axle, and
the Y-axis direction extending to transversely and perpendicularly intersect with the X-axis direction.

2. The shoe positioning device of a bicycle as claimed in claim 1, wherein each positioning element (20) further has an urging disk (23) formed around the cylindrical periphery of the rod (21) and underneath the locating block (22), mounted between the pedal (10) and the sole (30) and having:
a maximal width being larger than the first width and the second width of the bottom opening (311);
a bottom abutting against the top of a corresponding tab (13); and
a top abutting against the bottom of the sole (30).

3. The shoe positioning device of a bicycle as claimed in claim 1, wherein the rod (21) of each positioning element (20) further has threads formed on the cylindrical periphery of the rod (21), the through hole (131) of each tab (13) is a threaded hole, and the rod (21) of each positioning element (20) is selectively screwed into the threaded hole of one of the tabs (13) of the pedal (10).

4. The shoe positioning device of a bicycle as claimed in claim 2, wherein the rod (21) of each positioning element (20) further has threads formed on the cylindrical periphery of the rod (21), the through hole (131) of each tab (13) is a threaded hole, and the rods (21) of each positioning element (20) is selectively screwed into the threaded hole of one of the tabs (13) of the pedal (10).

5. The shoe positioning device of a bicycle as claimed in one of claims 1 to 4, wherein the locating block (22) of each positioning element (20) is dome-shaped.
